# EUROPEAN PATENT APPLICATION

(11) **EP 4 756 630 A1**
(43) Date of publication of application: **10.06.2026**
(21) Application number: 25217096.4
(22) Date of filing: 19.11.2025
(51) Int. Cl.: G06F 13/40, G06F 13/42

(54) **PERIPHERAL COMPONENT INTERCONNECT EXPRESS DEVICE, OPERATING METHOD THEREOF, AND OPERATING METHOD OF STORAGE DEVICE**

(30) Priority: 05.12.2024 KR 20240179708
(71) Applicant: Samsung Electronics Co., Ltd., Suwon-si, Gyeonggi-do 16677 (KR)
(72) Inventor: LEE, Heejun, 16677 Suwon-si (KR); KWAK, Youngho, 16677 Suwon-si (KR); KIM, Sungha, 16677 Suwon-si (KR); IM, Yoonbin, 16677 Suwon-si (KR); CHOI, Changsung, 16677 Suwon-si (KR)
(74) Representative: Marks & Clerk LLP

(57) **Abstract**

Provided is an operating method of a peripheral component interconnect express (PCIe) device in an electronic device, the operating method including initiating establishment of a link between the electronic device and an external electronic device, performing an equalization operation between the electronic device and the external electronic device to change a link speed between the electronic device and the external electronic device, identifying whether a timeout has occurred during the equalization operation and reperforming link training and retrying changing the link speed, based on the timeout occurring.

## Description

### BACKGROUND

Example embodiments of the inventive concepts relate to a peripheral component interconnect express (PCIe) device, an operating method thereof, and an operating method of a storage device.

Semiconductor devices may include interfaces for exchanging data with other external devices, and the interfaces may be implemented according to various specifications. Among the interfaces which may be utilized for connecting semiconductor devices to each other, PCIe interfaces may be applied in various fields for high-speed data transmission. A PCIe interface, such as a serial transmission-type interface, is defined by the PCIe standard and may provide a bi-directional connection that enables data to be transmitted and received simultaneously. Semiconductor devices connected to each other via a PCIe interface may perform an equalization (EQ) operation via link training to increase link speed, thereby compensating for a reduced signal integrity (SI) margin. However, when a timeout occurs during the EQ (e.g., a timeout in EQ phase 0 or EQ phase 1), a link-up may be performed at a relatively lower speed than a target link speed, and thus, data transmission and reception speeds between the semiconductor devices may be reduced.

### SUMMARY

Some example embodiments of the inventive concepts provide a peripheral component interconnect express (PCIe) device for retrying changing a link speed between electronic devices even when a timeout occurs during equalization of the PCIe interface, an operating method thereof, and an operating method of a storage device.

Example embodiments of the inventive concepts are not limited to the example embodiments mentioned above, and other example embodiments not described herein are clearly understood by those skilled in the art from the following descriptions.

According to some example embodiments of the inventive concepts, there is provided an operating method of a PCIe device in an electronic device, the operating method including initiating establishment of a link between the electronic device and an external electronic device, performing an equalization operation between the electronic device and the external electronic device to change a link speed between the electronic device and the external electronic device, identifying whether a timeout has occurred during the equalization operation and reperforming link training and retrying changing the link speed, based on the timeout occurring.

According to some example embodiments of the inventive concepts, there is provided a PCIe device in an electronic device, the PCIe device including a memory device configured to store a plurality of presets, a communication circuit configured to transmit and receive a signal, and a processor. The processor is configured to initiate establishment of a link between the electronic device and an external electronic device, perform an equalization operation between the electronic device and the external electronic device to change a link speed between the electronic device and the external electronic device, identify whether a timeout has occurred during the equalization operation, and reperform link training and retry changing the link speed based on the timeout occurring.

According to some example embodiments of the inventive concepts, there is provided an operating method of a storage device including a PCIe device, the operating method including initiating establishment of a link between the storage device and a host device, performing an equalization operation between the storage device and the host device to change a link speed between the storage device and the host device, identifying if a timeout in an equalization phase 0 (EQ phase 0) has occurred during the equalization operation, and transmitting a changed preset request signal to the host device after reperforming the link training based on the timeout in the EQ phase 0, and retrying changing the link speed.

According to some example embodiments of the inventive concepts, there is provided a storage system comprising a host device including a host controller, a host memory device connected to the host controller, and a host interface circuit, and a storage device configured to be in communication with the host device, the storage device including a storage controller, and a non-volatile memory device. The storage controller may include a peripheral component interconnect express (PCIe) device, the PCIe device including a memory device configured to store a plurality of presets, a communication circuit configured to transmit and receive a signal; and a processor. The processor is configured to initiate establishment of a link between the host device and the storage device, perform an equalization operation between the host device and the storage device to change a link speed between the host device and the storage device, identify whether a timeout has occurred during the equalization operation, and reperform link training and retry changing the link speed based on the timeout occurring.

According to some example embodiments of the inventive concepts the PCIe device of the storage controller is configured to link with the host device by establishing a link with the host device through a PCIe interface.

At least some of the above and other features of the invention are set out in the claims.

### BRIEF DESCRIPTION OF THE DRAWINGS

Some example embodiments will be more clearly understood from the following detailed description taken in conjunction with the accompanying drawings in which:
FIG. 1 is a block diagram illustrating a storage system according to some example embodiments;
FIG. 2 is a block diagram illustrating a layered state of the storage system of FIG. 1, according to some example embodiments;
FIG. 3 is a diagram illustrating a process of establishing a link of a storage device of FIG. 1, according to some example embodiments;
FIG. 4 illustrates an example of a link established between a host device and a storage device, according to some example embodiments;
FIG. 5 illustrates an example of electronic devices attempting to change a link speed via equalization of FIG. 3;
FIG. 6 illustrates a block diagram of a PCIe device according to some example embodiments;
FIG. 7 is a flowchart illustrating an operating method of a PCIe device, according to some example embodiments;
FIG. 8 is a flowchart illustrating an operating method of a PCIe device, according to some example embodiments;
FIG. 9 is a flowchart illustrating an operating method of a PCIe device, according to some example embodiments;
FIG. 10 is a block diagram illustrating a storage system having a PCIe device according to some example embodiments; and
FIG. 11 is a block diagram illustrating an electronic system having a PCIe device according to some example embodiments.

### DETAILED DESCRIPTION

Hereinafter, example embodiments are described in detail with reference to the accompanying drawings. Some example embodiments are illustrated in the drawings and the detailed descriptions thereof are given. However, this is not intended to limit the various example embodiments to any particular forms. For example, it is obvious to those skilled in the art that the example embodiments can be changed in various ways.

Components described in the detailed description with reference to terms, such as 'part', 'unit', 'module', 'block', '-or', '-er', and 'device', and function blocks illustrated in the drawings may be provided as software, hardware, or a combination thereof. For example, the software may include machine code, firmware, embedded code, and application software. For example, the hardware may include electric circuits, electronic circuits, processors, computers, integrated circuits, integrated circuit cores, pressure sensors, inertial sensors, microelectromechanical systems (MEMS), passive devices, or combinations thereof.

In the following diagrams, a preset may refer to an initial preset.

In the following diagrams, for convenience of description, a storage system is illustrated as an example of a system to which a peripheral component interconnect express (PCIe) device according to some example embodiments (e.g., PCIe devices 115 and 215) is applied, but example embodiments are not limited thereto. Systems/devices to which PCIe devices according to some example embodiments are applied may be applied to a variety of electronic systems that perform PCIe interface-based data communications.

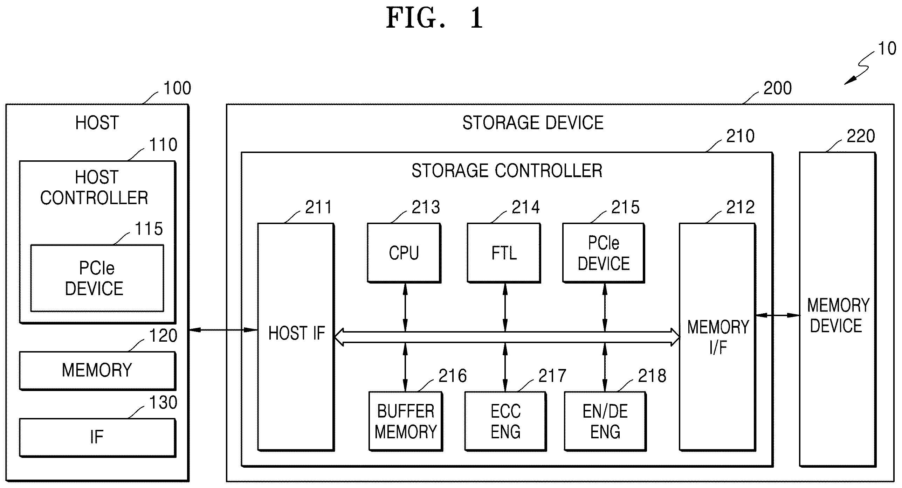

FIG. 1 is a block diagram illustrating a storage system 10 according to some example embodiments.

Referring to FIG. 1, the storage system 10 may include a host device 100 and a storage device 200. Also, the storage device 200 may include a storage controller 210 and a non-volatile memory (NVM) device 220. In addition, according to some example embodiments, the host device 100 may include a host controller 110, host memory device 120, and an interface circuit 130. The host memory device 120 may function as buffer memory for temporarily storing data to be transmitted to the storage device 200 or data transmitted from the storage device 200.

The storage device 200 may include storage media for storing data in response to a request from the host device 100. For example, the storage device 200 may include at least one of a solid state drive (SSD), embedded memory, and detachable external memory. When the storage device 200 includes the SSD, the storage device 200 may include a device that conforms to a non-volatile memory express (NVMe) standard. When the storage device 200 includes the embedded memory or the external memory, the storage device 200 may include a device that conforms to a universal flash storage (UFS) standard or an embedded multi-media card (eMMC) standard. The host device 100 and the storage device 200 may each generate and transmit a packet according to the adopted standard protocol.

When the NVM device 220 of the storage device 200 includes flash memory, the flash memory may include a 2D NOT-AND (NAND) memory array or a 3D (or vertical) NAND (VNAND) memory array. In another example, the storage device 200 may include other types of NVMs. For example, the storage device 200 may include magnetic random-access memory (MRAM), spin-transfer torque MRAM (STT-MRAM), conductive bridging RAM (CBRAM), ferroelectric RAM (FeRAM), phase-change RAM (PRAM), resistive RAM, and other types of memory.

According to some example embodiments, the host controller 110 and the host memory device 120 may be provided as individual semiconductor chips. Alternatively, in some example embodiments, the host controller 110 and the host memory device 120 may be integrated into a single semiconductor chip. For example, the host controller 110 may include any one of a plurality of modules provided in an application processor, and the application processor may be provided as a system on chip (SoC). Also, the host memory device 120 may include embedded memory provided inside the application processor or include NVM or a memory module arranged outside of the application processor.

The host controller 110 may manage an operation of storing, in the NVM device 220, data (e.g., write data) of a buffer region of the host memory device 120 or storing, in the buffer region, data (e.g., read data) of the NVM device 220.

The interface circuit 130 may perform data communication between the host device 100 and the storage device 200 according to a communication protocol. The communication protocol may be the PCIe standard. In the following description, data is exchanged between the host device 100 and the storage device 200 on the basis of the PCIe standard. Here, a transmission path and a reception path along which data flows between the host device 100 and the storage device 200 are defined as a link, and the link may include one or more pairs of transmission paths and reception paths. Also, each of the pairs of transmission paths and reception paths is defined as a lane, and the number of lanes forming one link is defined as a link width. The host device 100 and the storage device 200 may set up a link at a physical layer of a PCIe interface protocol, based on a PCIe device 115 and a PCIe device 215, respectively, to transmit and receive data to and from each other.

The host controller 110 may include the PCIe device 115 that establishes/sets up a link with the storage device 200 on the outside via a PCIe interface. The PCIe device 115 may set up, on a plurality of transmission and reception ports in an interface circuit 130, data lanes for actually sending and receiving data, clock lanes for receiving clock signals, and power lanes for inputting power voltages. Also, the PCIe device 115 may perform a link-up process to set up a link with the storage device 200 by determining values of PHY parameters that are configurable at the physical layer. For example, the PCIe device 115 may include a link training and status state machine (LTSSM) that represents various states of the link, and according to the LTSSM, the link width, the data rate, the lane number, the polarity of the lanes, the boundaries between consecutive bits, etc. may be determined during the link-up process.

The storage controller 210 may include a host interface circuit 211, a memory interface 212, and a central processing unit (CPU) 213. The storage controller 210 may further include a flash translation layer (FTL) 214, the PCIe device 215, buffer memory 216, an error correction code (ECC) engine 217, and an encryption/decryption engine 218. The storage controller 210 may further include a working memory (not shown) into which the FTL 214 is loaded, and data write and read operations for the NVM device 220 may be controlled by the CPU 213 executing the FTL 214.

The host interface circuit 211 may transmit and receive a packet to and from the host device 100. The packet transmitted from the host device 100 to the host interface circuit 211 may include a command or data to be written to the NVM device 220, and the packet transmitted from the host interface circuit 211 to the host device 100 may include a response to the command, data read from the NVM device 220, or the like. The memory interface 212 may transmit data to be written on the NVM device 220 to the NVM device 220 or receive data read from the NVM device 220.

The FTL 214 may perform several functions, such as address mapping, wear-leveling, and garbage collection. The address mapping operation includes an operation that changes a logical address received from the host device 100 into a physical address used to actually store data in the NVM device 220. The wear-leveling is related to technology for limiting and/or preventing excessive degradation of specific blocks by ensuring that blocks in the NVM device 220 are used substantially uniformly and may be performed by, for example, firmware technology that balances erase counts of physical blocks. The garbage collection is related to a technology for securing usable capacity within the NVM device 220 by copying valid data of a block to a new block and then erasing the existing block.

The PCIe device 215 may set up, on a plurality of transmission and reception ports in a host interface circuit 211, data lanes for actually sending and receiving data, clock lanes for receiving clock signals, and power lanes for inputting power voltages. Also, the PCIe device 215 may perform a link-up process to set up a link with the host device 100 by determining values of PHY parameters that are configurable at the physical layer. For example, the PCIe device 215 may include an LTSSM that represents various states of the link, and according to the LTSSM, the link width, the data rate, the lane number, the polarity of the lanes, the boundaries between consecutive bits, etc. may be determined during the link-up process.

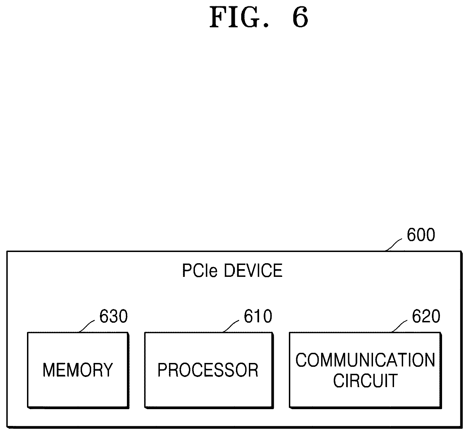

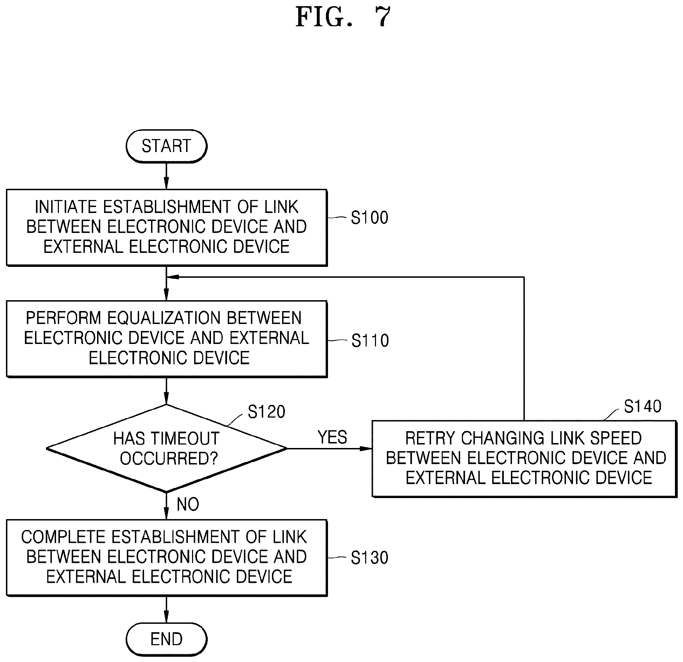

The PCIe devices (e.g., the PCIe device 115 and the PCIe device 215) may perform equalization to change a link speed between devices. When a timeout occurs during such equalization, the PCIe device according to some example embodiments may not immediately link up at a pre-change link speed, but may retry the change in link speed. A configuration of the PCIe device according to some example embodiments is described with reference to FIG. 6, and a method for retrying a link speed change by the PCIe device is described in detail with reference to FIGS. 7 to 9.

Also, the buffer memory 216 may temporarily store data to be written on the NVM device 220 or data to be read from the NVM device 220. The buffer memory 216 may be provided inside the storage controller 210 but may also be provided outside the storage controller 210.

The ECC engine 217 may perform error detection and correction functions on read data that is read from the NVM device 220. More specifically, the ECC engine 217 may generate parity bits for write data to be written on the NVM device 220, and the parity bits generated in this manner may be stored in the NVM device 220 together with the write data. When reading data from the NVM device 220, the ECC engine 217 may correct errors in the read data by using parity bits read from the NVM device 220 together with the read data and may then output the read data with errors corrected.

The encryption/decryption engine 218 may perform at least one of encryption and decryption operations on data input to the storage controller 210. For example, the encryption/decryption engine 218 may perform the encryption operation and/or the decryption operation by using a symmetric-key algorithm. Here, the encryption/decryption engine 218 may perform the encryption operation and/or the decryption operation by using, for example, an advanced encryption standard (AES) algorithm or a data encryption standard (DES) algorithm. Also, for example, the encryption/decryption engine 218 may perform the encryption operation and/or the decryption operation by using a public-key encryption algorithm. In this case, the encryption/decryption engine 218 may, for example, perform encryption by using a public key in the encryption operation and perform decryption by using a private key in the decryption operation. For example, the encryption/decryption engine 218 may use Rivest Shamir Adleman (RSA), elliptic curve cryptography (ECC), or Diffie-Hellman (DH) encryption algorithm. However, the example embodiments are not limited thereto, and the encryption/decryption engine 218 may perform the encryption operation and/or the decryption operation by using quantum cryptographic techniques, such as homomorphic encryption (HE), post-quantum cryptography (PQC), and functional encryption (FE).

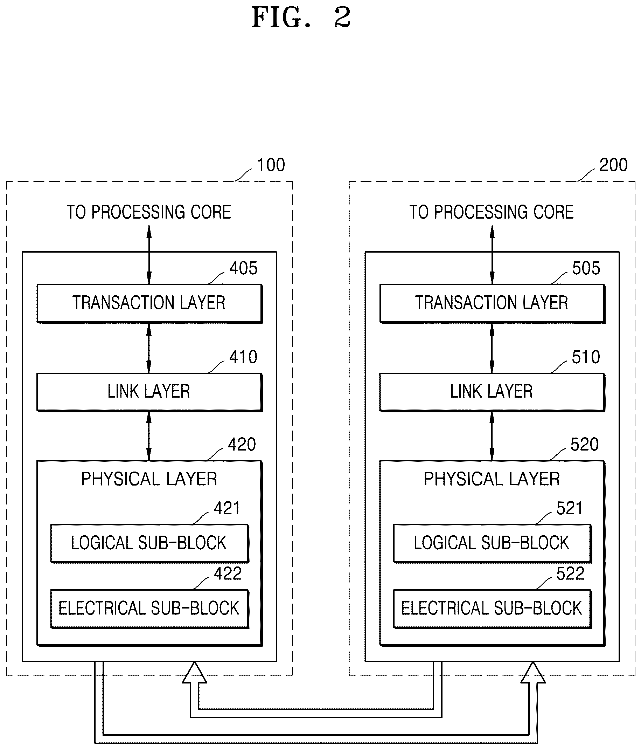

FIG. 2 is a block diagram illustrating a layered state of the storage system 10 of FIG. 1, according to some example embodiments.

Referring to FIGS. 1 and 2, each of the host device 100 and the storage device 200 may form, for example, a layered protocol stack based on the PCIe standard. The host device 100 includes a transaction layer 405, a link layer 410, and a physical layer 420.

The interface circuit 130 in the host device 100 of FIG. 1 may be formed as, for example, a layered protocol stack according to the PCIe standard of FIG. 2. Also, the storage device 200 includes a transaction layer 505, a link layer 510, and a physical layer 520.

The host interface circuit 211 in the storage device 200 of FIG. 1 may be formed as, for example, a layered protocol stack according to the PCIe standard of FIG. 2. Components (e.g., the host device 100 and/or the storage device 200) that communicate with each other according to the PCIe standard may use packets to send and receive information.

The packets may be formed in the transaction layers 405 and 505 and the link layers 410 and 510 and transmitted from a transmission component (e.g., the host device 100 or the storage device 200) to a reception component (e.g., the storage device 200 or the host device 100).

Hereinafter, for convenience of description, a packet is described as being transmitted, for example, from the host device 100 to the storage device 200. That is, the packets may be formed at the transaction layer 405 and the link layer 410 and transmitted from the host device 100 to the storage device 200.

While the packets transmitted from the transaction layer 405 of the host device 100 pass through different layers, the packets may be further expanded by the addition of information that may be essential to control the packets at each of the different layers.

The storage device 200 may perform transformations on the packets received from the host device 100 so that the packets may be interpreted at the physical layer 520 and the link layer 510, and the transformed packets may be processed at the transaction layer 505.

The transaction layers 405 and 505 may serve as interfaces between the link layers 410 and 510 and cores that control the respective components. For example, the transaction layer 405 may serve as an interface between the link layer 410 and a core that is located in the host controller 110 to control the host device 100. In addition, for example, the transaction layer 505 may serve as an interface between the link layer 510 and a core (e.g., the CPU 213) that is located in the storage controller 210 to control the storage device 200. That is, the transaction layers 405 and 505 may be responsible for assembling or disassembling packets (e.g., transaction layer packets (TLPs)).

The link layers 410 and 510 may act as intermediates between the transaction layers 405 and 505 and the physical layers 420 and 520, respectively. More specifically, the link layers 410 and 510 may apply a reliable mechanism to the transaction layer packets so that the transaction layer packets may be exchanged between the transaction layers 405 and 505 and the physical layers 420 and 520, respectively. For example, the link layer 410 receives assembled transaction layer packets via the transaction layer 405. The link layer 410 may apply packet sequence identifiers (e.g., identification numbers or packet numbers) to the transaction layer packets that have been received via the transaction layer 405. Subsequently, the link layer 410 may perform a computation by applying an error detection code (e.g., cyclic redundancy checking (CRC)) to the transaction layer packets to which the packet sequence identifiers have been applied. Then, the link layer 410 may transmit the modified transaction layer packets to the physical layer 420, and the physical layer 420 may transmit the packets received from the link layer 410 to an external device (e.g., the storage device 200).

For another example, the link layer 510 receives assembled transaction layer packets via the transaction layer 505. The link layer 510 may apply packet sequence identifiers (e.g., identification numbers or packet numbers) to the transaction layer packets that have been received via the transaction layer 505. Subsequently, the link layer 510 may perform a computation by applying an error detection code (e.g., CRC) to the transaction layer packets to which the packet sequence identifiers have been applied. Then, the link layer 510 may transmit the modified transaction layer packets to the physical layer 520, and the physical layer 520 may transmit the packets received from the link layer 510 to an external device (e.g., the host device 100).

The physical layers 420 and 520 may include logic subblocks 421 and 521 and electrical subblocks 422 and 522, respectively. The logic subblocks 421 and 521 may be responsible for enabling the physical layers 420 and 520, respectively, to perform digital functions. More specifically, the logic subblocks 421 and 521 may include transmitters that prepare the information output by the electrical subblocks 422 and 522, respectively. In addition, the logic subblocks 421 and 521 may include receivers that, prior to delivering the information received from the external device to the link layers 410 and 510, identify the information received from the external device and prepare for delivery of the information to the link layers 410 and 510, respectively. For example, the logic subblock 421 may prepare information output to the external device (e.g., the storage device 200) by the electrical subblock 422, and may identify information received from the external device (e.g., the storage device 200) and prepare for transmission of the information to the link layer 410. For another example, the logic subblock 521 may prepare information output to the external device (e.g., the host device 100) by the electrical subblock 522, and may identify information received from the external device (e.g., the host device 100) and prepare for transmission of the information to the link layer 510.

Here, a link establishment process (e.g., an LTSSM) may be performed in order for packets to be transmitted and received between the host device 100 and the storage device 200.

In order for the packets to be transmitted and received between the host device 100 and the storage device 200, the process of establishing the link (e.g., the LTSSM) may be performed between the physical layers 420 and 520, and more specifically, between the logic subblocks 421 and 521.

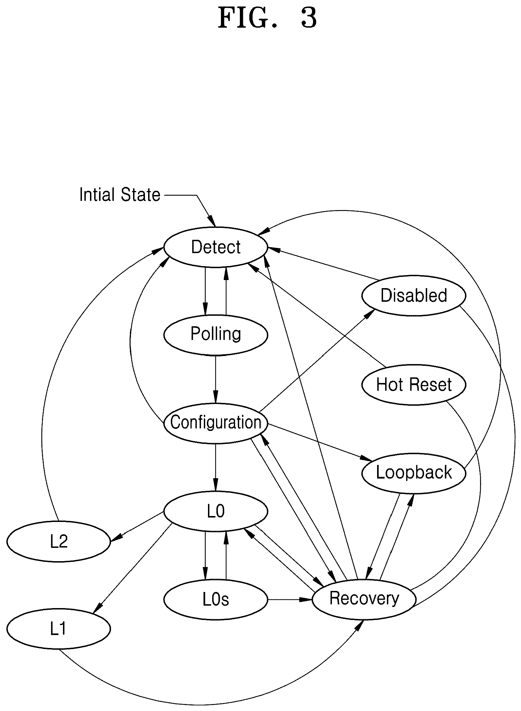

FIG. 3 further illustrates the process by which the link is established for packets to be transmitted and received between the host device 100 and the storage device 200.

FIG. 3 is a diagram illustrating a process of establishing the link of the storage device 200 of FIG. 1, according to some example embodiments.

FIGS. 1 and 3 illustrate the process by which the storage device 200 establishes a link (e.g., an LTSSM) with the host device 100. For example, the LTSSM may provide a link-up process, which is a control process for establishing/setting up and initializing the link. In addition to configuring and initializing the link on the PCIe interface, the LTSSM may also perform packet transmission support, link error recovery, and restarting of the PCIe interface in a low-power state.

Referring to FIGS. 1 and 3, an initial state may be in a detect state. In the detect state, when a connection from another device (e.g., the host device 100) is detected, the storage device 200 may enter a polling state.

In the polling state, a generation version of the protocol (e.g., the PCIe) of the host device 100 and a generation version of the protocol (e.g., the PCIe) of the storage device 200 may be determined, and a transmission rate (e.g., a link speed) of data may be determined based on the highest compatible generation version. In addition, in the polling state, the storage controller 210 may set bit lock, symbol lock, block lock, and lane polarity. In the polling state, the storage controller 210 may transmit, at a transmission rate of 2.5 GT/s, TS1 and TS2 that are an ordered set.

After the polling state, the storage device 200 may enter a configuration state. In the configuration state, the storage controller 210 may set the number of lanes of the link, e.g., the link width. In addition, in the configuration state, the storage controller 210 may exchange TS1 and TS2 with the host device 100 at a transmission rate of 2.5 GT/s. The storage controller 210 may assign lane numbers, and may verify and correct lane reversal. The storage controller 210 may deskew the lane-to-lane timing difference.

After the configuration state, the storage controller 210 may enter an L0 state. The L0 state may represent a normal operating state in which data is sent and received via the set link. In the L0 state, the storage controller 210 may communicate with the host device 100 via the link.

An L0s state may represent an active state power management (ASPM) state, which is an electrical idle/standby state. Until the storage controller 210 enters the L0 state, the storage controller 210 may reduce power consumption in the L0s state. The L1 state may be in a power-saving state (e.g., a low-power standby/sleep state) that consumes less power than the L0s state. The L2 state is in an off-state and may use a voltage low just enough to detect a wake up event. A disabled state may be entered when the storage controller 210 disables the link. A loopback state may be used, by the storage controller 210, for the purpose of testing and fault isolation. A hot reset state may be used when the storage controller 210 resets the link via in-band signaling.

A recovery state may perform functions of removing bit lock, symbol lock, inter-lane skew, etc. or may change the link speed on the basis of data, such as a training sequence sent and received by a transmitter and a receiver, when an error occurs while operating in the L0 state or when returning to the L0 state from the L1 state. For example, the recovery state may have substates, such as Recovery.RcvrLock, Recovery.Equalization, Recovery.Speed, Recovery.RcvrCfg, Recovery.Idle, etc. and may enter the detect state, the configuration state, the L0 state, the loopback state, the hot reset state, or the disabled state depending on the results from the substates. In the substate of Recovery.Equalization, the equalization between devices may be optimized by exchanging training sequences with the receiver. In Recovery.Equalization, a preset may be set while changing the phase from phase0 to phase3, and the equalization may be completed. Each of the phases, from phase 0 to phase 3, may represent an equalization process.

The loopback state represents a state for a test, and the LTSSM may enter the loopback state according to values of loopback bits in symbol sets arranged in a preset order and exchanged between devices connected to the PCIe interface. In the loopback state, the receiver may transmit again all the received packets in the same manner. In the hot reset state, the LTSSM may perform the function of resetting the link. In the disabled state, the transmitter may be switched to an electrical idle state when the receiver is in a low-impedance state by the LTSSM. In the link-up process of setting up the link, the LTSSM may perform the above functions while moving through the 11 states described above (e.g., the detect state, the polling state, ..., the hot reset state, etc.) in a certain order.

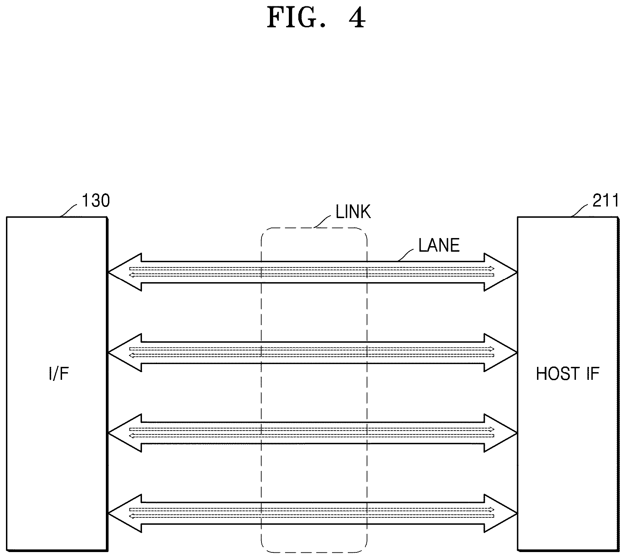

FIG. 4 illustrates an example of a link established between the host device 100 and the storage device 200 according to some example embodiments.

FIG. 1 and FIG. 4 show an example of a link LINK established between the interface circuit 130 of the host device 100 and the host interface circuit 211 of the storage device 200. The link LINK may include at least one lane LANE. For example, the link LINK may include lanes LANE corresponding to a number selected from a group consisting of 1, 2, 4, 8, and 16. For example, it is assumed that four lanes LANE are contained in the link LINK. The lanes LANE may simultaneously transmit or receive signals. The lanes LANE may correspond to parallel signal lines. The lanes LANE may be configured to have the same link speed.

The data transmission rate of the link LINK may be determined by multiplying the number of lanes LANE contained in the link LINK, e.g., the link width, and the link speeds of respective lanes LANE. The storage device 200 according to some example embodiments may adjust the link width, e.g., the number of lanes LANE contained in the link LINK, in order to adjust the data transmission rate of the link LINK.

Each of the lanes LANE may include a transmission channel and a reception channel. The transmission channel of the host interface circuit 211 may correspond to the arrow from the host interface circuit 211 toward the interface circuit 130. The reception channel of the host interface circuit 211 may correspond to the arrow from the interface circuit 130 toward the host interface circuit 211. Each of the transmission channel and the reception channel may include complementary signal lines.

Here, in the recovery state described with reference to FIG. 3, the link training and the equalization may be performed between the interface circuit 130 of the host device 100 and the host interface circuit 211 of the storage device 200. In the PCIe standard, the equalization may be performed through a total of four phases (e.g., phase 0 to phase 3).

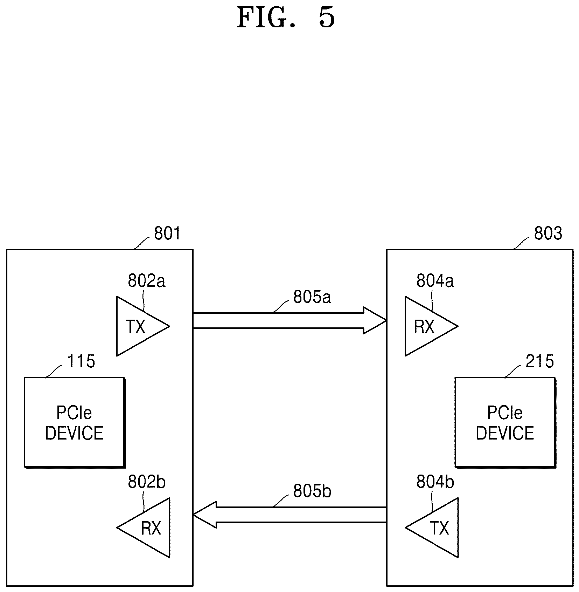

FIG. 5 illustrates an example of electronic devices attempting to change a link speed via the equalization of FIG. 3.

Referring to FIG. 1 and FIG. 5, electronic devices connected to each other based on the PCIe interface may perform equalization between the electronic devices to change the link speed.

Two different components, more specifically a root complex device 801 and an endpoint device 803, may be connected to each other via a pair of communication links 805a and 805b different from each other. For example, the root complex device 801 may correspond to a device included in the interface circuit 130 of the host device 100 of FIG. 1. In addition, the endpoint device 803 may correspond to a device included in the host interface circuit 211 of the storage device 200 of FIG. 1. The root complex device 801 and the endpoint device 803 include transmission logic circuits 802a and 804b and reception logic circuits 804a and 802b, respectively, to communicate with each other.

In some example embodiments, the root complex device 801 may include a downstream port as described in the PCIe standard. In addition, in some example embodiments, the endpoint device 803 may include an upstream port as described in the PCIe standard.

During PCIe interface-based equalization, the first data sets may be transmitted from the downstream port (e.g., the root complex device 801) to the upstream port (e.g., the endpoint device 803).

During the PCIe interface-based equalization process, the rate at which the first data sets are transmitted may be less than or equal to (or substantially equal to) the first maximum data transmission rate related to the root complex device 801 and the second maximum data transmission rate related to the endpoint device 803.

Recently, a signal integrity (SI) margin may decrease as a PCIe link speed increases. The root complex device 801 (corresponding to the host device 100) and the endpoint device 803 (corresponding to the storage device 200) may compensate for the reduced SI gain due to the increase in link speed, and to this end, the root complex device 801 and the endpoint device 803 may perform equalization via the PCIe devices 115 and 215, respectively. When a preset (e.g., an initial preset) requested by the PCIe device 115 of the root complex device 801 or the PCIe device 215 of the endpoint device 803 during the equalization process is not an optimized preset, a timeout may occur at equalization operation 0 (e.g., EQ phase 0) or equalization operation 1 (e.g., EQ phase 1). When the timeout occurs, the root complex device 801 and the endpoint device 803 may be linked up at a link speed (e.g., Gen 3) that is relatively lower than the target link speed (e.g., Gen 4 or Gen 5), which may degrade the data transmission and reception performance.

Therefore, when the timeout occurs during the equalization operation (e.g., EQ phase 0 or EQ phase 1), the PCIe devices 115 and 215 according to some example embodiments may request a modified preset (e.g., an initial preset different from the preset at which the timeout has occurred) to retry changing the link speed, thereby preventing formation of the link-up at a relatively lower link speed.

Furthermore, the link speed may be prevented from being lowered due to the timeout, thereby improving the data transmission and/or reception performance (e.g., increasing the transmission and reception rates) between electronic devices that are connected to each other via the PCIe interface and the communication performance of the entire system. Operation methods of the PCIe devices 115 and 215 according to some example embodiments are described in detail with reference to FIGS. 6 to 9.

FIG. 6 illustrates a block diagram of a PCIe device 600 according to some example embodiments.

Any or all of the elements described with reference to FIG. 6 may communicate with any or all other elements described with reference to FIG. 6. For example, any element may engage in one-way and/or two-way and/or broadcast communication with any or all other elements in any of the figures, to transfer and/or exchange and/or receive information such as but not limited to data and/or commands, such as in a serial and/or parallel manner, via a bus such as a wireless and/or a wired bus (not illustrated). The information may be in encoded various formats, such as in an analog format and/or in a digital format, without being limited thereto.

The PCIe device 600 of FIG. 6 may correspond to the PCIe device 115 and the PCIe device 215 of FIGS. 1 to 5. In FIG. 6, the electronic device may represent the storage device 200 and the external electronic device may represent the host device 100. However, the inventive concepts are not limited thereto, and according to some example embodiments, the electronic device may represent the host device 100 and the external electronic device may represent the storage device 200.

Referring to FIG. 6, the PCIe device 600 may include a processor 610, a communication circuit 620, and memory 630.

The processor 610 may control the PCIe device 600 by executing a plurality of commands. For example, the processor 610 may execute software (e.g., a program) to control at least one of different components (e.g., hardware or software components) of the PCIe device 600, and may perform various data processing or computation related to the PCIe interface.

The processor 610 may initiate establishing a link between the electronic device and the external electronic device, and may perform equalization between the electronic device and the external electronic device to change the link speed between the electronic device and the external electronic device. The processor 610 may identify whether a timeout has occurred during the equalization. When it is identified that the timeout has occurred, the processor 610 may perform again the link training and equalization between the electronic device and the external electronic device to retry changing the link speed. In some example embodiments, when a timeout occurs in equalization operation 0 or equalization operation 1 for changing the link speed from 16 GT/s (e.g., Gen 4) to 32 GT/s (e.g., Gen 5), the processor 610 may perform a retry to change the link speed to 32 GT/s (e.g., Gen 5), rather than immediately linking up to the pre-change link speed (which is lower than 32 GT/s (e.g., Gen 5)). For example, the processor 610 may perform again the link training between the electronic device and the external electronic device to gradually increase the link speed. Here, the processor 610 may forcibly return to the detect state of LTSSM (see FIG. 3), perform again the link training, and then increase the link speed from Gen 1 to Gen 4 again through the recovery state. During the retry for changing the link speed from 16 GT/s (e.g., Gen 4) to 32 GT/s (e.g., Gen 5), the processor 610 may retry changing the link speed by requesting a preset different from the preset for which the timeout has occurred in the Recovery.RcvrCfg state (hereinafter, referred to as a change preset) or by transmitting a transmission signal generated based on the change preset. Here, the processor 610 may select, as the change preset, a preset that is different from the preset for which the timeout has occurred from among a plurality of presets stored in the memory 630 on the basis of the preshoot. Here, the preset may include initial setting values for adjusting a waveform of the transmission signal during the equalization process. The preset may correspond to a preset described in the PCIe standard. For example, the preset may include initial setting values for preshoot, de-emphasis, pre-cursor (***C-1***), post-cursor **(*C+1***), etc. as described in the PCIe standard. In particular, the initial preset may represent the first preset after the link speed changes. From the link speed of 16 GT/s (e.g., Gen 4), a bi-directional preset request (e.g., an initial preset request) between the electronic device and the external electronic device is possible. For example, prior to entering a substate (e.g., Recovery.Speed) of the recovery state for changing a speed, the processor 610 may transmit a preset request signal to a counterpart electronic device that includes an initial preset desired in another substate (e.g., Recovery.RcvrCfg). The counterpart electronic device should transmit a first data packet after the link speed change, by using a transmission signal according to the requested preset. According to some example embodiments, when the timeout occurs during the change of the link speed, the processor 610 may retry changing the link speed by requesting the change preset to the counterpart device, or by transmitting to the counterpart device the transmit signal generated on the basis of the change preset. This is described below in detail with reference to FIGS. 7 to 9.

The communication circuit 620 may be electrically connected to the processor 610, and may receive a signal from the outside or transmit a signal to the outside by using a wired communication network. For example, the communication circuit 620 may receive, from the external electronic device (or the electronic device), or may transmit, to the external electronic device (or the electronic device), a signal (e.g., a preset request signal) utilized for link training and equalization between the electronic device and the external electronic device.

The memory 630 may be provided as a non-transitory storage device and store a plurality of commands or pieces of data executed by the processor 610. For example, the memory 630 may include, as non-limiting examples, any type of memory accessible by the processor 610, such as an RAM, a read only memory (ROM), a tape, a magnetic disc, an optical disc, a volatile memory, an NVM, and a combination thereof. The memory 630 may communicate with the processor 610 to store a plurality of presets for the link training and equalization. Here, the plurality of stored presets may include presets described in the PCIe standard (e.g., the initial preset). For example, the plurality of presets may include preset P0 to preset P9 depending on the waveform of the signal. However, example embodiments are not limited thereto, and the plurality of presets may include any number of presets.

FIG. 7 is a flowchart illustrating an operating method of a PCIe device, according to some example embodiments.

Referring to FIG. 7, a method of retrying changing a link speed by a PCIe device, according to some example embodiments, may include operation S100 to operation S140. In the description of FIG. 7, repeated descriptions as those given above with reference to FIGS. 1 to 6 are replaced with the descriptions with reference to FIGS. 1 to 6.

In FIG. 7, the PCIe device may correspond to any of the PCIe devices (e.g., 115, 215, and 600) of FIGS. 1 to 6. In FIG. 7, the electronic device may represent the storage device 200 and the external electronic device may represent the host device 100. However, the inventive concepts are not limited thereto, and according to some example embodiments, the electronic device may represent the host device 100 and the external electronic device may represent the storage device 200.

In operation S100, the PCIe device may initialize (e.g. initiate) establishment of the link between the electronic device and the external electronic device. The PCIe device may perform the link training and equalization described in the PCIe standard to establish the link between the electronic device and the external electronic device. For example, the PCIe device may perform the link training and equalization described in the PCIe standard to change the link speed between the electronic device and the external electronic device (e.g., to increase the link speed from 16 GT/s (Gen 4) to 32 GT/s (Gen 5)).

In operation S110, the PCIe device may perform the equalization between the electronic device and the external electronic device to change the link speed. For example, the PCIe device may exchange training sequences between the electronic device and the external electronic device during Phase 0 to Phase 3 in a substate of the recovery state (e.g., the Recovery.Equalization state) to optimize the equalization between the electronic device and the external electronic device. When the link speed is 16 GT/s or more, a preset request signal, which requests the desired preset (e.g., the initial preset) to counterpart electronic devices, may be exchanged between the electronic device and the external electronic device in a substate of the recovery state (e.g., Recovery.RcvrCfg). Subsequently, when initially transmitting a packet at the changed link speed, the electronic device and the external electronic device may transmit a transmission signal according to the preset requested from the counterpart electronic devices.

In operation S120, the PCIe device may identify whether a timeout has occurred during the equalization process. Here, the timeout may indicate that phased operations of equalization are not completed within a set time because a preset (e.g., an initial preset) requested by the electronic device or the external electronic device (see operation S110) is not a preset optimized for the current link. For example (for convenience of description, assuming that the PCIe device is included in the electronic device), the timeouts may include a first timeout (e.g., corresponding to a timeout in equalization operation 0 (Phase 0)) caused by the electronic device failing to receive a signal transmitted from the external electronic device and a second timeout (e.g., corresponding to a timeout in equalization operation 0 (Phase 0)) caused by the external electronic device failing to receive a signal transmitted from the electronic device.

The PCIe device may perform operation S130 when no timeout has occurred during the equalization process, and may perform operation S140 when the timeout has occurred during the equalization process.

In operation S130, the PCIe device may complete the establishment of the link between the electronic device and the external electronic device. For example, the PCIe device may link up the link between the electronic device and an external electronic device at a changed link speed (e.g., an increased link speed).

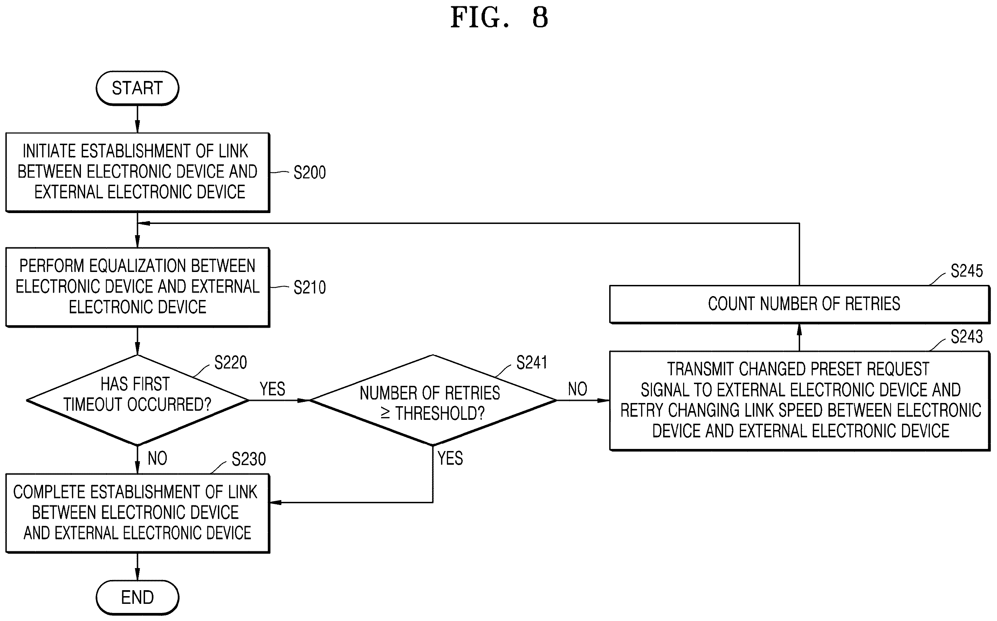

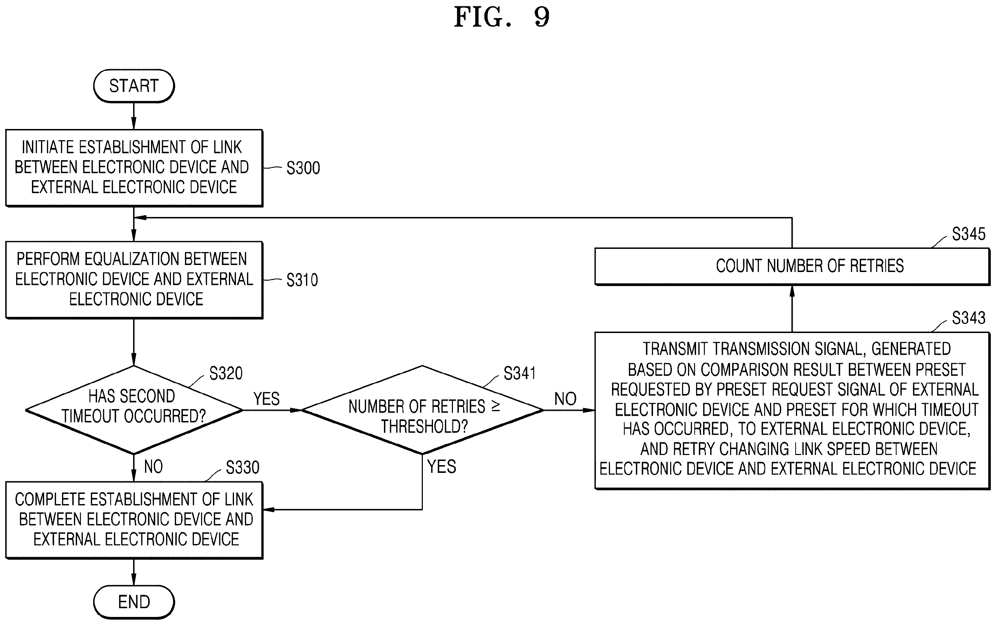

In operation S140, the PCIe device may retry changing the link speed between the electronic device and the external electronic device. That is, the PCIe device may perform again the link training, change the preset (e.g., the initial preset) of operation S110, and retry changing the link speed between the electronic device and the external electronic device. For example, when the timeout occurs, the PCIe device may forcibly return to the detect state of LTSSM (see FIG. 3) and perform again the link training. The PCIe device may perform again the link training and then gradually increase the link speed up to the target link speed via the recovery state. The PCIe device may retry changing the link speed to the target link speed by using the change preset in the equalization process for changing the link speed to the target link speed (e.g., operation S110). Here, the target link speed may represent a link speed intended to be achieved by changing the link speed. According to some example embodiments, a method of retrying changing the link speed of the PCIe device when the first timeout occurs is described with reference to FIG. 8. Also, a method of retrying changing the link speed of the PCIe device when a second timeout occurs is described with reference to FIG. 9.

The PCIe device according to some example embodiments may retry changing the link speed when the timeout occurs in the equalization operation (e.g., EQ phase 0 or EQ phase 1). Accordingly, the PCIe device according to some example embodiments may prevent link-up at a pre-change link speed (a relatively lower speed) due to the occurrence of the timeout, and further improve data transmission and/or reception performance between electronic devices on the basis of a changed link speed (a relatively higher speed).

FIG. 8 is a flowchart illustrating the operating method of the PCIe device, according to some example embodiments.

Referring to FIG. 8, the method of retrying changing the link speed by the PCIe device, according to some example embodiments, may include operation S200 to operation S245. In the description of FIG. 8, repeated descriptions as those given above with reference to FIGS. 1 to 7 are replaced with the descriptions with reference to FIGS. 1 to 7.

In FIG. 8, the PCIe device may correspond to any of the PCIe devices (e.g., 115, 215, and 600) of FIGS. 1 to 7. In FIG. 8, the electronic device may represent the storage device 200 and the external electronic device may represent the host device 100. However, the inventive concepts are not limited thereto, and according to some example embodiments, the electronic device may represent the host device 100 and the external electronic device may represent the storage device 200.

In FIG. 8, for convenience of description, the PCIe device is assumed to be a PCIe device that is included in the electronic device, but example embodiments are not limited thereto. According to embodiments, the PCIe device may represent a PCIe device that is included in the external electronic device.

The descriptions of operations S200 to S210 are repeated from the descriptions of operations S100 to S110 of FIG. 7 and are therefore replaced with the descriptions of operations S100 to S110 of FIG. 7.

In operation S220, the PCIe device may identify whether the first timeout has occurred during the equalization process. Here, the timeout may indicate that the phased operations of equalization are not completed within the set time because the preset (e.g., the initial preset) requested by the electronic device or the external electronic device (see operation S110) is not the preset optimized for the current link. For example, the first timeout may be caused by the electronic device failing to receive a signal transmitted from the external electronic device. Here, the first timeout may correspond to a timeout of the equalization operation 0 (Phase 0).

The PCIe device may perform operation S230 when the first timeout has not occurred during the equalization process, and may perform operation S241 when the first timeout has occurred during the equalization process.

In operation S230, the PCIe device may complete the establishment of the link between the electronic device and the external electronic device. The PCIe device may link up (or set up) the link between the electronic device and the external electronic device at the changed link speed. For example, when the equalization is optimized (e.g., the equalization is completed without the occurrence of timeout) at a link speed of 32 GT/s (Gen 5), the PCIe device may link up the link between the electronic device and the external electronic device at 32 GT/s (Gen 5).

In operation S241, the PCIe device may identify whether the number of retries for changing the link speed is greater than or equal to a threshold. The PCIe device may perform operation S230 when the number of retries is greater than or equal to the threshold or may perform operation S243 when the number of retries is less than the threshold. Here, when the number of retries is greater than or equal to the threshold, the PCIe device may, in operation S230, link up (or set up) the link between the electronic device and the external electronic device to the pre-change link speed.

In operation S243, the PCIe device may transmit a changed preset request signal to the external electronic device and retry changing the link speed between the electronic device and the external electronic device. That is, when the first timeout occurs during changing the link speed to the target link speed, the PCIe device may perform again the link training to change the preset of operation S210 (e.g., the initial preset), thereby retrying changing the link speed between the electronic device and the external electronic device. For example, when the first timeout occurs while changing the link speed to the target link speed, the PCIe device may forcibly return to the detect state of the LTSSM (see FIG. 3) and perform again the link training. The PCIe device may perform again the link training and then gradually increase the link speed up to the target link speed via the recovery state. In the recovery state (e.g., Recovery.RcvrCfg state) for changing the link speed to the target link speed, the PCIe device may retry changing the link speed by transmitting the signal (e.g., the changed preset request signal) requesting, to the external electronic device, a first change preset that is an initial preset different from the preset (e.g., the initial preset) for which the timeout has occurred. For example, the PCIe device may select the first change preset from a plurality of presets stored based on the preshoot. Subsequently, during the equalization process for changing the link speed to the target link speed, the external electronic device may transmit a transmission signal, generated based on the first change preset, to the electronic device. That is, the PCIe device may perform again the equalization with respect to the target link speed by using the first change preset (e.g., receiving the transmission signal generated based on the first change preset to perform again the equalization with respect to the target link speed) and retry changing the link speed to the target link speed. Here, the target link speed may represent a link speed intended to be achieved by changing the link speed.

In operation S245, the PCIe device may count the number of retries each time the PCIe device retries changing the link speed. The PCIe device may store, in memory, the number of counted retries. To reduce and/or prevent degradation of the communication performance due to repeated retries, the PCIe device according to some example embodiments may perform retries for changing the link speed within the desired (and/or alternatively predetermined) number of retries. After counting the number of retries, the PCIe device may perform again operation S210 (e.g., the link training and the equalization operation).

When the timeout occurs during the equalization operation, the PCIe device according to some example embodiments may retry changing the link speed by requesting the changed preset (e.g., the initial preset different from the preset for which the timeout has occurred).

Accordingly, the PCIe device according to some example embodiments may reduce and/or prevent link-up at the pre-change link speed (the relatively lower speed) due to the occurrence of the timeout, and further improve the data transmission and/or reception performance between electronic devices on the basis of the changed link speed (the relatively higher speed).

FIG. 9 is a flowchart illustrating the operating method of the PCIe device, according to some example embodiments.

Referring to FIG. 9, the method of retrying changing the link speed by the PCIe device, according to some example embodiments, may include operation S300 to operation S345. In the description of FIG. 9, repeated descriptions as those given above with reference to FIGS. 1 to 8 are replaced with the descriptions with reference to FIGS. 1 to 8.

In FIG. 9, the PCIe device may correspond to any of the PCIe devices (e.g., 115, 215, and 600) of FIGS. 1 to 8. In FIG. 9, the electronic device may represent the storage device 200 and the external electronic device may represent the host device 100. However, the inventive concepts are not limited thereto, and according to some example embodiments, the electronic device may represent the host device 100 and the external electronic device may represent the storage device 200.

In FIG. 9, for convenience of description, the PCIe device is assumed to be a PCIe device that is included in the electronic device, but example embodiments are not limited thereto. According to embodiments, the PCIe device may represent a PCIe device that is included in the external electronic device.

The descriptions of operations S300 to 3210 are repeated from the descriptions of operations S100 to S110 of FIG. 7 and are therefore replaced with the descriptions of operations S100 to S110 of FIG. 7.

In operation S320, the PCIe device may identify whether the second timeout has occurred during the equalization process. Here, the timeout may indicate that phased operations of equalization are not completed within a set time because a preset (e.g., an initial preset) requested by the electronic device or the external electronic device (see operation S110) is not a preset (e.g., an initial preset) optimized for the current link. For example, the second timeout may be caused by the external electronic device failing to receive a signal transmitted from the electronic device. Here, the second timeout may correspond to a timeout of the equalization operation 1 (Phase 1).

The PCIe device may perform operation S330 when the second timeout has not occurred during the equalization process, and may perform operation S341 when the second timeout has occurred during the equalization process.

In operation S330, the PCIe device may complete the establishment of the link between the electronic device and the external electronic device. The PCIe device may link up (or set up) the link between the electronic device and the external electronic device at the changed link speed. For example, when the equalization is optimized (e.g., the equalization is completed without the occurrence of timeout) at a link speed of 32 GT/s (Gen 5), the PCIe device may link up the link between the electronic device and the external electronic device at 32 GT/s (Gen 5).

In operation S341, the PCIe device may identify whether the number of retries for changing the link speed is greater than or equal to a threshold. The PCIe device may perform operation S330 when the number of retries is greater than or equal to the threshold or may perform operation S343 when the number of retries is less than the threshold. Here, when the number of retries is greater than or equal to the threshold, the PCIe device may, in operation S330, link up (or set up) the link between the electronic device and the external electronic device to the pre-change link speed (e.g. complete the establishment of the link between the electronic device and the external electronic device).

In operation S343, the PCIe device may transmit, to the external electronic device, the transmission signal generated based on a result of comparison between the preset (e.g., the initial preset) requested by the preset request signal of the external electronic device and the preset for which the timeout has occurred, and may retry changing the link speed between the electronic device and the external electronic device.

In some example embodiments, when the second timeout occurs while changing the link speed to the target link speed, the PCIe device may perform again the link training. For example, when the second timeout occurs during the equalization process for changing the link speed to the target link speed, the PCIe device may forcibly return to the detect state of the LTSSM (see FIG. 3) and perform again the link training. The PCIe device may perform again the link training and then gradually increase the link speed up to the target link speed via the recovery state. Subsequently, the PCIe device may receive the preset request signal from the external electronic device in the recovery state (e.g., the Recovery.RevrCfg state) for changing the link speed to the target link speed. When the preset (e.g., the initial preset) requested by the external electronic device is the same as the preset for which the timeout has occurred, the PCIe device may generate the transmission signal based on a second change preset that is an initial preset different from the requested preset, and may transmit the generated transmission signal to the external electronic device and retry changing the link speed. Here, the PCIe device may select the second change preset from a plurality of presets stored based on the preshoot. Here, the target link speed may represent a link speed intended to be achieved by changing the link speed. For another example, when the second timeout occurs during the equalization process for changing the link speed to the target link speed, the PCIe device may forcibly return to the detect state of the LTSSM (see FIG. 3) and perform again the link training. The PCIe device may perform again the link training and then gradually increase the link speed up to the target link speed via the recovery state. Subsequently, the PCIe device may receive the preset request signal from the external electronic device in the recovery state (e.g., the Recovery.RcvrCfg state) for changing the link speed to the target link speed. When the preset (e.g., the requested initial preset) requested by the external electronic device is an initial preset different from the preset for which the timeout has occurred, the PCIe device may generate a transmission signal based on the requested preset (e.g., the requested initial preset), and may transmit the generated transmission signal to the external electronic device and retry changing the link speed. That is, the PCIe device may perform again the equalization by using the second change preset and retry changing the link speed to the target link speed.

In operation S345, the PCIe device may count the number of retries each time the PCIe device retries changing the link speed. The PCIe device may store, in memory, the number of counted retries. To reduce and/or prevent degradation of the communication performance due to repeated retries, the PCIe device according to some example embodiments may perform retries for changing the link speed within the desired (and/or alternatively predetermined) number of retries. After counting the number of retries, the PCIe device may perform again operation S310 (e.g., the link training and the equalization operation).

When the timeout occurs during the equalization operation, the PCIe device according to some example embodiments may retry changing the link speed by transmitting a transmission signal using an initial preset different from the preset for which the timeout has occurred.

Accordingly, the PCIe device according to some example embodiments may prevent link-up at the pre-change link speed (the relatively lower speed) due to the occurrence of the timeout, and further improve the data transmission and/or reception performance between electronic devices on the basis of the changed link speed (the relatively higher speed).

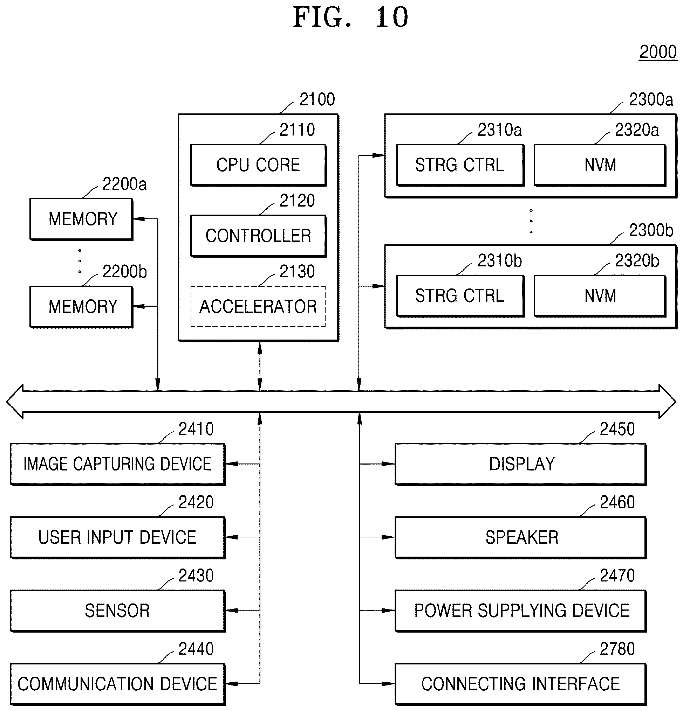

FIG. 10 is a block diagram illustrating a storage system having the PCIe device according to some example embodiments.

Referring to FIG. 10, a system 2000 may basically include mobile systems, such as a portable mobile phone, a smartphone, a tablet personal computer (PC), a wearable device, a healthcare device, and an internet of things (IoT) device. However, the system 2000 of FIG. 10 is not necessarily limited to the mobile systems described above and may include a PC, a laptop, a server, a media player, an automotive device, such as a navigation unit, or the like.

Referring to FIG. 10, the system 2000 may include a main processor 2100, memory 2200a and 2200b, and storage devices 2300a and 2300b, and may further include one or more of an image capturing device 2410, a user input device 2420, a sensor 2430, a communication device 2440, a display 2450, a speaker 2460, a power supplying device 2470, and a connecting interface 2780.

The main processor 2100 may control all operations of the system 2000, and more specifically, operations of all other components that constitute the system 2000. The main processor 2100 may be provided as a general-purpose processor, a dedicated processor, or an application processor.

The main processor 2100 may include one or more CPU cores 2110 and may further include a controller 2120 for controlling the memory 2200a and 2200b and/or the storage devices 2300a and 2300b. According to some example embodiments, the main processor 2100 may further include an accelerator 2130, which includes a dedicated circuit for high-speed data computation, such as artificial intelligence (AI) data computation. The accelerator 2130 may include a graphics processing unit (GPU), a neural processing unit (NPU), and/or a data processing unit (DPU) and may be provided as a separate chip physically independent from other components of the main processor 2100.

The memory 2200a and 2200b may be used as main memory devices of the system 2000 and include volatile memory, such as static random-access memory (SRAM) and dynamic random-access memory (DRAM). However, the memory 2200a and 2200b may also include NVM, such as flash memory, PRAM, MRAM, and resistive random-access memory (RRAM). The memory 2200a and 2200b may also be provided in the same package as the main processor 2100.

The storage devices 2300a and 2300b may function as non-volatile storage devices for storing data regardless of whether power is supplied or not thereto and may have storage capacities relatively greater than those of the memory 2200a and 2200b. The storage devices 2300a and 2300b may respectively include storage controllers 2310a and 2310b and NVM 2320a and 2320b that store data under the control by the storage controllers 2310a and 2310b. The NVM 2320a and 2320b may include flash memory with a 2-dimensional (2D) structure or a 3-dimensional (3D) vertical NAND (V-NAND) structure but may also include other types of NVM, such as PRAM and RRAM.

The storage devices 2300a and 2300b may be provided in the system 2000 while being physically separated from the main processor 2100 or may be provided in the same package as the main processor 2100. In addition, the storage devices 2300a and 2300b may be formed as an SSD or a memory card and thus detachably coupled to other components of the system 2000 via an interface, such as the connecting interface 2780 described below. The storage devices 2300a and 2300b may include devices, to which standard regulations are applied, such as UFS, eMMC, and NVMe, but the example embodiments are not limited thereto.

The storage devices 2300a and 2300b according to some example embodiments may include the PCIe device described above with reference to FIGS. 1 to 9.

The storage devices 2300a and 2300b according to some example embodiments may initiate establishment of a link between the storage devices 2300a and 2300b and the main processor 2100 (e.g., the host device), and may perform equalization between devices to change a link speed between the storage devices 2300a and 2300b and the main processor 2100 (e.g., the host device). During the equalization, a timeout of equalization phase 0 (EQ phase 0) may be identified. When the timeout in EQ phase 0 occurs, a changed preset request signal may be transmitted to the main processor 2100 (e.g., the host device) to retry changing the link speed. Here, the timeout in EQ phase 0 may represent a timeout caused by the storage devices 2300a and 2300b failing to receive a signal transmitted from the main processor 2100 (e.g., the host device) in EQ phase 0.

In some example embodiments, when the timeout in EQ phase 0 occurs, the storage devices 2300a and 2300b may count the number of retries each time a change in the link speed is retried, and may set up the link between the storage devices 2300a and 2300b and the main processor 2100 (e.g., the host device) at a pre-change link speed when the number of counted retries is greater than or equal to a threshold.

In some example embodiments, the storage devices 2300a and 2300b may identify whether a timeout in EQ phase 1 has occurred during the equalization, receive a preset request signal from the main processor 2100 (e.g., the host device) when the timeout in EQ phase 1 has occurred, and generate a transmission signal on the basis of a result of comparison between a preset (e.g., an initial preset) requested by the preset request signal and a preset for which the timeout has occurred. The storage devices 2300a and 2300b may transmit the generated transmission signal to the main processor 2100 (e.g., the host device) and retry changing the link speed. Here, the timeout in EQ phase 1 may be a timeout caused by the main processor 2100 (e.g., the host device) failing to receive a signal transmitted from the storage devices 2300a and 2300b in EQ phase 1. For example, when the requested preset (e.g., the initial preset) is the same preset (e.g. is identical to) as the preset for which the timeout has occurred, the storage devices 2300a and 2300b may transmit, to the main processor 2100 (e.g., the host device), a transmission signal based on a second change preset that is a different initial preset than the requested preset (e.g., the initial preset) and retry changing the link speed. For example, when the requested preset (e.g., the initial preset) is not the same preset as the preset for which the timeout has occurred, the storage devices 2300a and 2300b may transmit, to the main processor 2100 (e.g., the host device), a transmission signal based on the requested preset (e.g., the initial preset) and retry changing the link speed.

In some example embodiments, when the timeout in EQ phase 1 occurs, the storage devices 2300a and 2300b may count the number of retries each time a change in the link speed is retried, and may set up the link between the storage devices 2300a and 2300b and the main processor 2100 (e.g., the host device) at the pre-change link speed when the number of counted retries is greater than or equal to a threshold.

The image capturing device 2410 may capture still images or moving images and include a camera, a camcorder, and/or a webcam. However, example embodiments are not limited thereto.

The user input device 2420 may receive various types of data input from a user of the system 2000 and include a touch pad, a keypad, a keyboard, a mouse, and/or a microphone.

The sensor 2430 may sense various types of physical quantities obtained from outside the system 2000 and convert the sensed physical quantities into electrical signals. The sensor 2430 may include a temperature sensor, a pressure sensor, an illuminance sensor, a position sensor, an acceleration sensor, a biosensor, and/or a gyroscope sensor. However, example embodiments are not limited thereto.

The communication device 2440 may transmit and receive signals to and from other devices outside the system 2000 according to various communication protocols. The communication device 2440 may include an antenna, a transceiver, and/or a modem. However, example embodiments are not limited thereto.

The display 2450 and the speaker 2460 may function as output devices that output visual information and auditory information, respectively, to a user of the system 2000.

The power supplying device 2470 may appropriately convert power supplied from a battery (not shown) built in the system 2000 and/or from an external power source and may supply the converted power to each of the components of the system 2000.

The connecting interface 2780 may provide connection between the system 2000 and an external device which is connected to the system 2000 to exchange data with the system 2000. The connecting interface 2780 may be provided in various interface methods, such as advanced technology attachment (ATA), serial ATA (SATA), external SATA (e-SATA), a small computer small interface (SCSI), serial attached SCSI (SAS), PCI, PCI express (PCIe), NVM express (NVMe), IEEE 1394, a universal serial bus (USB), a secure digital (SD) card interface, MMC, eMMC, UFS, embedded UFS (eUFS), and a compact flash (CF) card interface. However, example embodiments are not limited thereto.

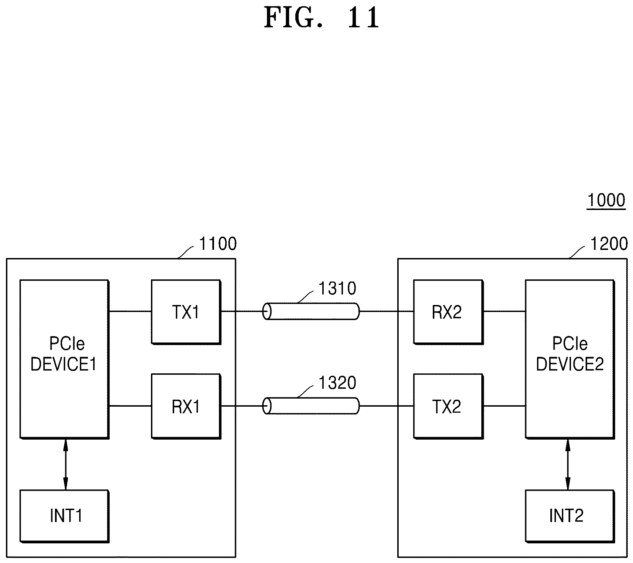

FIG. 11 is a block diagram illustrating an electronic system 1000 having the PCIe device according to some example embodiments.

In FIG. 11, each of a PCIe device 1 and a PCIe device 2 may correspond to the PCIe devices (e.g., 115, 215, and 600) of FIGS. 1 to 10. In FIG. 11, an electronic device 1100 may represent the storage device 200 and an external electronic device 1200 may represent the host device 100. However, the inventive concepts are not limited thereto, and according to some example embodiments, the electronic device 1100 may represent the host device 100 and the external electronic device 1200 may represent the storage device 200.

FIG. 11 shows a system that performs bi-directional communication. Referring to FIG. 11, the electronic system 1000 may include the electronic device 1100 and the external electronic device 1200. According to embodiments, each of the electronic devices (e.g., the electronic device 1100 and the external electronic device 1200) may be implemented as one of a variety of electronic devices, such as a desktop computer, a laptop computer, a tablet computer, a smartphone, a wearable device, a video game console, a household appliance, and a medical device. However, example embodiments are not limited thereto.

However, the embodiments are not limited thereto, and in some example embodiments, the electronic system 1000 may be implemented as a single electronic device. In some example embodiments, each of the electronic devices (e.g., the electronic device 1100 and the external electronic device 1200) may represent a component or an intellectual property (IP) included in the single electronic device, and may also be implemented as a circuit, a module, a chip, and/or a package-level object. The terms "systems" and "devices" are provided for the purpose of enabling a better understanding and are not intended to limit the embodiments.

The electronic devices (e.g., the electronic device 1100 and the external electronic device 1200) may communicate with each other and exchange data/signals via communication channels 1310 and 1320. Each of the communication channels 1310 and 1320 may include a conductive material to transmit the data/signals. For example, each of the communication channels 1310 and 1320 may be formed, on a printed circuit board (PCB), as a trace pattern, a conductive wire in a cable, a metal pin/pad in a connector, or the like. FIG. 11 illustrates the communication channels 1310 and 1320 as two uni-directional communication channels 1310 and 1320, but according to some example embodiments, the two uni-directional communication channels 1310 and 1320 may be integrated into a single bi-directional communication channel.

The electronic device 1100 may include an internal circuit INT1 performing a unique function thereof, the PCIe device 1, a transmission circuit TX1, and a reception circuit RX1. The external electronic device 1200 may include an internal circuit INT2 performing a unique function thereof, the PCIe device 2, a transmission circuit TX2, and a reception circuit RX2.

The internal circuits INT1 and INT2 may operate to provide unique functions of the electronic devices (e.g., the electronic device 1100 and the external electronic device 1200), respectively. For example, the internal circuits INT1 and INT2 may constitute various components or IP, such as a processor (e.g., a CPU, an AP, etc.), memory, an image sensor, and a display. However, example embodiments are not limited thereto.

The electronic devices (e.g., the electronic device 1100 and the external electronic device 1200) may be provided as separate components, IPs, or devices. Therefore, the electronic device 1100 may represent an external device to the external electronic device 1200, and the external electronic device 1200 may represent an external device to the electronic device 1100.

Even if the timeout occurs during the equalization for changing the link speed between the electronic devices (e.g., the electronic device 1100 and the external electronic device 1200), the PCIe devices (the PCIe device 1 and the PCIe device 2) may change the preset (e.g., the initial preset) to retry changing the link speed, thereby limiting and/or preventing the link speed from degrading and enabling the electronic devices (e.g., the electronic device 1100 and the external electronic device 1200) to exchange a large amount of data during a unit of time.

Through the method described above, even if the timeout occurs during the equalization, the electronic devices (e.g., the electronic device 1100 and the external electronic device 1200) may increase the link speed to the target link speed via the PCIe devices (the PCIe device 1 and PCIe device 2), thereby enabling rapid exchange of the data/signals between the electronic devices (e.g., the electronic device 1100 and the external electronic device 1200).

One or more of the elements disclosed above may include or be implemented in processing circuitry such as hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

According to some example embodiments of the inventive concepts, there is provided a storage system comprising a host device including a host controller, a host memory device connected to the host controller, and a host interface circuit, and a storage device configured to be in communication with the host device, the storage device including a storage controller, and a non-volatile memory device. The storage controller may include a peripheral component interconnect express (PCIe) device, the PCIe device including a memory device configured to store a plurality of presets, a communication circuit configured to transmit and receive a signal; and a processor. The processor is configured to initiate establishment of a link between the host device and the storage device, perform an equalization operation between the host device and the storage device to change a link speed between the host device and the storage device, identify whether a timeout has occurred during the equalization operation, and reperform link training and retry changing the link speed based on the timeout occurring.

According to some example embodiments of the inventive concepts the PCIe device of the storage controller is configured to link with the host device by establishing a link with the host device through a PCIe interface.
Embodiments are set out in the following clauses:
Clause 1. An operating method of a peripheral component interconnect express (PCIe) device in an electronic device, the operating method comprising: initiating establishment of a link between the electronic device and an external electronic device; performing an equalization operation between the electronic device and the external electronic device to change a link speed between the electronic device and the external electronic device; identifying whether a timeout has occurred during the equalization operation; and reperforming link training and retrying changing the link speed, based on the timeout occurring.
Clause 2. The operating method of Clause 1, wherein the timeout comprises a first timeout based on the electronic device failing to receive a signal transmitted from the external electronic device, and a second timeout based on the external electronic device failing to receive a signal transmitted from the electronic device.
Clause 3. The operating method of Clause 2, wherein the retrying of changing the link speed based on the timeout being the first timeout comprises reperforming the link training based on being in a recovery state, transmitting a signal requesting a first change preset to the external electronic device, and retrying changing the link speed, and the first change preset is different from a preset for which the timeout has occurred.
Clause 4. The operating method of Clause 2 or 3, wherein the retrying of changing the link speed based on the timeout being the first timeout further comprises counting a number of retries each time a change in the link speed is retried, and setting up the link between the electronic device and the external electronic device at a pre-change link speed based on the number of retries being greater than or equal to a threshold.
Clause 5. The operating method of any one of Clauses 2, 3 or 4, wherein the retrying of changing the link speed based on the timeout being the second timeout comprises receiving a preset request signal from the external electronic device based on a recovery state after the reperforming the link training, and generating and transmitting a transmission signal to the external electronic device based on a comparison between a requested preset, requested by the preset request signal, and a preset for which the timeout has occurred, and retrying changing the link speed.
Clause 6. The operating method of Clause 5, wherein the retrying of changing the link speed further comprises transmitting a transmission signal to the external electronic device based on the requested preset being identical to the preset for which the timeout has occurred and a second change preset being different from the requested preset, and retrying changing the link speed, and transmitting a transmission signal to the external electronic device based on the requested preset not being identical to the preset for which the timeout has occurred, and retrying changing the link speed.
Clause 7. The operating method of any one of Clauses 2 to 6, wherein the retrying of changing the link speed based on the timeout being the second timeout comprises counting a number of retries each time a change in the link speed is retried, and setting up the link between the electronic device and the external electronic device at a pre-change link speed, based on the number of retries being greater than or equal to a threshold.
Clause 8. A peripheral component interconnect express (PCIe) device in an electronic device, the PCIe device comprising: a memory device configured to store a plurality of presets; a communication circuit configured to transmit and receive a signal; and a processor, wherein the processor is configured to initiate establishment of a link between the electronic device and an external electronic device, perform an equalization operation between the electronic device and the external electronic device to change a link speed between the electronic device and the external electronic device, identify whether a timeout has occurred during the equalization operation, and reperform link training and retry changing the link speed based on the timeout occurring.
Clause 9. The PCIe device of Clause 8, wherein the timeout comprises a first timeout based on the electronic device failing to receive a signal transmitted from the external electronic device, and a second timeout based on the external electronic device failing to receive a signal transmitted from the electronic device.
Clause 10. The PCIe device of Clause 9, wherein the processor, based on the timeout being the first timeout, is further configured to transmit to the external electronic device a signal requesting a first change preset and retry changing the link speed based on the processor being in a recovery state after reperforming the link training, and the first change preset is different from a preset for which the timeout has occurred.
Clause 11. The PCIe device of Clause 9 or 10, wherein the processor, based on the timeout being the first timeout, is further configured to count a number of retries each time a change in the link speed is retried, and set up the link between the electronic device and the external electronic device at a pre-change link speed based on the number of retries being greater than or equal to a threshold.
Clause 12. The PCIe device of Clause 9, 10 or 11, wherein the processor, based on the timeout being the second timeout, is further configured to receive a preset request signal from the external electronic device based on the processor being in a recovery state after performing the link training, and generate and transmit a transmission signal to the external electronic device based on a result of comparison between a preset requested by the preset request signal and a preset for which the timeout has occurred, and retry changing the link speed.
Clause 13. The PCIe device of any one of Clauses 9 to 12, wherein the processor, based on a request to retry changing the link speed, is further configured to transmit a transmission signal to the external electronic device based on a requested preset being identical to a preset for which the timeout has occurred, and further based on a second change preset being different from the requested preset, and retry changing the link speed, and transmit a transmission signal to the external electronic device based on the requested preset not being identical to the preset for which the timeout has occurred, and further based on the requested preset, and retry changing the link speed.
Clause 14. The PCIe device of any one of Clauses 9 to 13, wherein the processor, based on the timeout being the second timeout, is configured to count a number of retries each time a change in the link speed is retried, and set up the link between the electronic device and the external electronic device at a pre-change link speed based on the number of retries being greater than or equal to a threshold.
Clause 15. An operating method of a storage device including a peripheral component interconnect express (PCIe) device, the operating method comprising: initiating establishment of a link between the storage device and a host device; performing an equalization operation between the storage device and the host device to change a link speed between the storage device and the host device; identifying if a timeout in an equalization phase 0 (EQ phase 0) has occurred during the equalization operation; and transmitting a changed preset request signal to the host device after reperforming the link training based on the timeout in the EQ phase 0, and retrying changing the link speed.

While the inventive concept has been particularly shown and described with reference to example embodiments thereof, it will be understood that various changes in form and details may be made therein without departing from the scope of the following claims.

## Claims

1. An operating method of a peripheral component interconnect express (PCIe) device in an electronic device, the operating method comprising:
initiating establishment of a link between the electronic device and an external electronic device (S100);
performing an equalization operation between the electronic device and the external electronic device to change a link speed between the electronic device and the external electronic device (S110);
identifying whether a timeout has occurred during the equalization operation (S120); and
reperforming link training and retrying changing the link speed, based on the timeout occurring (S140).

2. The operating method of claim 1, wherein
the timeout comprises
a first timeout based on the electronic device failing to receive a signal transmitted from the external electronic device, and
a second timeout based on the external electronic device failing to receive a signal transmitted from the electronic device.

3. The operating method of claim 2, wherein
the retrying of changing the link speed based on the timeout being the first timeout comprises
reperforming the link training based on being in a recovery state,
transmitting a signal requesting a first change preset to the external electronic device, and retrying changing the link speed (S243), and
the first change preset is different from a preset for which the timeout has occurred.

4. The operating method of claim 2 or claim 3, wherein
the retrying of changing the link speed based on the timeout being the first timeout further comprises
counting a number of retries each time a change in the link speed is retried (S245), and
setting up the link between the electronic device and the external electronic device at a pre-change link speed based on the number of retries being greater than or equal to a threshold (S230).

5. The operating method of any one of claims 2 to 4, wherein
the retrying of changing the link speed based on the timeout being the second timeout comprises
receiving a preset request signal from the external electronic device based on a recovery state after the reperforming the link training, and
generating and transmitting a transmission signal to the external electronic device based on a comparison between a requested preset, requested by the preset request signal, and a preset for which the timeout has occurred, and retrying changing the link speed (S243).

6. The operating method of claim 5, wherein
the retrying of changing the link speed further comprises
transmitting a transmission signal to the external electronic device based on the requested preset being identical to the preset for which the timeout has occurred and a second change preset being different from the requested preset, and retrying changing the link speed, and
transmitting a transmission signal to the external electronic device based on the requested preset not being identical to the preset for which the timeout has occurred, and retrying changing the link speed.

7. The operating method of any one of claims 2 to 6, wherein
the retrying of changing the link speed based on the timeout being the second timeout comprises
counting a number of retries each time a change in the link speed is retried, and
setting up the link between the electronic device and the external electronic device at a pre-change link speed, based on the number of retries being greater than or equal to a threshold.

8. A peripheral component interconnect express (PCIe) device (600) in an electronic device, the PCIe device comprising:
a memory device (630) configured to store a plurality of presets (P0-P9);
a communication circuit (620) configured to transmit and receive a signal; and
a processor (610),
wherein the processor (610) is configured to
initiate establishment of a link between the electronic device and an external electronic device,
perform an equalization operation between the electronic device and the external electronic device to change a link speed between the electronic device and the external electronic device,
identify whether a timeout has occurred during the equalization operation, and reperform link training and retry changing the link speed based on the timeout occurring.

9. The PCIe device (600) of claim 8, wherein
the timeout comprises
a first timeout based on the electronic device failing to receive a signal transmitted from the external electronic device, and
a second timeout based on the external electronic device failing to receive a signal transmitted from the electronic device.

10. The PCIe device (600) of claim 9, wherein
the processor (610), based on the timeout being the first timeout, is further configured to
transmit to the external electronic device a signal requesting a first change preset and retry changing the link speed based on the processor (610) being in a recovery state after reperforming the link training, and
the first change preset is different from a preset for which the timeout has occurred.

11. The PCIe device (600) of claim 9 or 10, wherein
the processor (610), based on the timeout being the first timeout, is further configured to
count a number of retries each time a change in the link speed is retried, and
set up the link between the electronic device and the external electronic device at a pre-change link speed based on the number of retries being greater than or equal to a threshold.

12. The PCIe device (600) of claim 9, 10 or 11, wherein
the processor (610), based on the timeout being the second timeout, is further configured to
receive a preset request signal from the external electronic device based on the processor (610) being in a recovery state after performing the link training, and
generate and transmit a transmission signal to the external electronic device based on a result of comparison between a preset requested by the preset request signal and a preset for which the timeout has occurred, and retry changing the link speed.

13. The PCIe device (600) of any one of claims 9 to 12, wherein
the processor (610), based on a request to retry changing the link speed, is further configured to
transmit a transmission signal to the external electronic device based on a requested preset being identical to a preset for which the timeout has occurred, and further based on a second change preset being different from the requested preset, and retry changing the link speed, and
transmit a transmission signal to the external electronic device based on the requested preset not being identical to the preset for which the timeout has occurred, and further based on the requested preset, and retry changing the link speed.

14. The PCIe device (600) of any one of claims 9 to 13, wherein
the processor (610), based on the timeout being the second timeout, is configured to
count a number of retries each time a change in the link speed is retried, and
set up the link between the electronic device and the external electronic device at a pre-change link speed based on the number of retries being greater than or equal to a threshold.

15. The operating method of claim 1, wherein the electronic device is a storage device (200) including a peripheral component interconnect express (PCIe) device (215) and the external electronic device is a host device (100), and wherein identifying whether the timeout has occurred during the equalization operation comprises identifying if a timeout in an equalization phase 0 (EQ phase 0) has occurred during the equalization operation, the operating method further comprising:
transmitting a changed preset request signal to the host device (100) after reperforming the link training based on the timeout in the EQ phase 0.
